# FASCICULE DE BREVET EUROPEEN

(11) **EP 2 293 675 B1**
(45) Date de publication et mention de la délivrance du brevet: **25.01.2012**
(21) Numéro de dépôt: 09797456.2
(22) Date de dépôt: 23.06.2009
(51) Int. Cl.: A22C 7/00, A23L 1/31, A23L 1/315, A23L 1/317, A23P 1/08

(54) **PROCEDE ET DISPOSITIFS DE FABRICATION DE PORTIONS DE PRODUITS ALIMENTAIRES FOURREES D'UNE GARNITURE**
VERFAHREN UND VORRICHTUNG ZUR HERSTELLUNG VON TEILEN FÜR MIT EINER FÜLLUNG GEFÜLLTE LEBENSMITTELPRODUKTE
METHOD AND DEVICES FOR MAKING PORTIONS OF FOOD PRODUCTS STUFFED WITH A FILLING

(30) Priorité: 24.06.2008 FR 0854187
(43) Date de publication de la demande: 16.03.2011
(73) Titulaire: Marel Stork Food Systems France SAS, 56150 Baud (FR)
(72) Inventeur: LE PAIH, Jacques, F-56930 Plumeliau (FR)
(74) Mandataire: Hays, Bertrand
(86) Numéro de dépôt international: PCT/EP2009/057808
(87) Numéro de publication internationale: WO 2010/006893

(56) Documents cités:
- WO-A-03/099021
- FR-A- 2 577 389

## Description

La présente invention concerne un procédé de fabrication de portions de produits alimentaires fourrées d'une garniture, formées d'un matériau principal à base de chair animale en morceaux, notamment de viande hachée crue, entourant un matériau de garniture, ainsi que des dispositifs de mise en oeuvre dudit procédé.

Il est connu notamment par le document brevet EP 1 509 089 un procédé et dispositif de fabrication de portions de viande hachée fourrées d'une garniture, tel que des steaks hachés fourrés. Le dispositif comprend un hachoir équipé en sortie de deux becs de distribution pour former une couche inférieure de viande hachée et une couche supérieure de viande hachée déposées respectivement sur un convoyeur principal et un convoyeur secondaire. Des doses de garniture sont déposées à intervalle régulier sur la couche inférieure, et la couche supérieure est ensuite amenée en recouvrement de la couche inférieure et de la garniture déposée sur cette dernière pour former une veine de viande hachée fourrée, qui passe ensuite dans un dispositif de coupe et de formage. Le dispositif de coupe et de formage comprend des moyens de coupe pour découper la veine de viande hachée en portions, des moyens de formage latéraux agissant simultanément de chaque côté de la veine de viande hachée pour former les contours des portions et des moyens de formage verticaux coopérant avec lesdits moyens de formage latéraux pour conférer auxdites portions l'épaisseur souhaitée.

Le dispositif nécessite une parfaite synchronisation entre le système de dépose de doses de garniture, le convoyeur et le dispositif de mise en portions pour effectuer les coupes au milieu des intervalles entre les doses de garniture. Par ailleurs, un tel dispositif présente une cadence de fabrication de portions limitée.

Le but de la présente invention est de proposer une solution visant à pallier les inconvénients précités.

A cet effet, la présente invention a pour objet un procédé de fabrication de portions de produits alimentaires fourrées d'une garniture, formées d'un matériau principal à base de chair animale en morceaux, telle que de viande hachée crue de boeuf, de veau, de porc ou de volaille, ou de chair de poisson, entourant un matériau de garniture, caractérisé en ce que ledit procédé comprend
- une étape de réalisation par extrusion d'une veine principale continue fourrée comprenant une couche extérieure continue de matériau principal entourant une couche interne continue d'un matériau de garniture liquide, semi-liquide ou pâteux,
- une étape de traitement du matériau principal, avant, pendant et/ou après la réalisation de ladite veine principale, par exemple par refroidissement et/ou gélification, pour augmenter la cohésion des morceaux de chair animale constituant ledit matériau principal, de manière à obtenir une couche extérieure sensiblement étanche audit matériau de garniture,
- une étape de mise en portions de ladite veine principale par pincement de la couche extérieure de matériau principal traité, au moins transversalement, pour chasser le matériau de garniture de la couche interne, puis par coupe de ladite veine principale au niveau de sa zone pincée de la veine sensiblement dépourvue de matériau de garniture pour former des portions.

Selon l'invention, on extrude le matériau de garniture en continu sous la forme d'une couche interne continue dans une veine principale continue comprenant en outre une couche extérieure de matériau principal entourant ladite couche interne, et la mise en portion s'effectue par pincement de la veine principale continue pour chasser la garniture. Pour permettre son extrusion et son déplacement lors de l'opération de pincement, le matériau de garniture est un matériau liquide, semi-liquide ou pâteux, par exemple une sauce à base de fromage et/ou de légumes, tel que du fromage fondu ou de la sauce tomate. Pour chasser la garniture lors de l'opération de pincement de la veine principale, sensiblement sans fuite à travers la couche extérieure formée de morceaux de chair animale, lesdits morceaux de chair animale sont traités de manière à obtenir une couche extérieure suffisamment étanche et résistante pour chasser le matériau, tout en gardant une souplesse suffisante pour se déformer lors du pincement. La veine principale est ensuite coupée au niveau des zones pincées. Le procédé selon l'invention permet la fabrication de portions fourrées, à des cadences élevées, les portions pouvant être de formes et de tailles diverses.

Dans le domaine de la fabrication de produits alimentaires, les produits frais, tels que la chair animale, sont classiquement conservés à une température comprise entre 0°C et 6°C, typiquement de l'ordre de 4°C. De manière surprenante, la demanderesse a découvert qu'un simple refroidissement de la chair animale à une température inférieure ou égale à 0°C, mais supérieure au point de congélation de la chair animale permettait d'obtenir une couche principale continue présentant à la fois une souplesse suffisante pour être écrasée sans se rompre et une cohésion entre les morceaux suffisante pour chasser la garniture, sensiblement sans fuites. Selon un mode de réalisation, ladite étape de traitement comprend donc le refroidissement du matériau principal, à une température inférieure ou égale à 0°C, et supérieure au point de congélation du matériau principal.

La température de traitement est définie en fonction de la température de congélation de la viande, qui dépend de la nature de la viande, notamment de sa teneur en eau et en sel. A titre d'exemple, pour un matériau principal formé de viande hachée de poulet et/ou de dinde, avec un point de congélation de l'ordre de -4°C, la viande est traitée à une température de l'ordre de -3°C. Dans le cas de viande de boeuf hachée, telle qu'utilisée pour la fabrication de steaks hachés, la viande est traitée à une température de l'ordre de -1°C.

Selon un mode de réalisation, le refroidissement est réalisé avant l'extrusion dudit matériau principal en couche extérieure continue. Le matériau principal, tel que de la viande en morceaux, est haché, puis refroidi, par exemple par mélange avec de l'azote ou du dioxyde de carbone, et/ou par passage ou stockage dans une enceinte réfrigérée. La viande hachée refroidie est ensuite extrudée. En variante, la viande hachée est refroidie après extrusion.

Selon un autre mode de réalisation, l'étape de traitement est réalisée par agglomération d'au moins une partie des morceaux de chair animale au moyen d'un gélifiant. La viande hachée peut être gélifiée avant extrusion, par mélange d'un gélifiant et d'une masse de viande en morceaux. Avantageusement, la viande en morceaux, par exemple de la viande hachée est gélifiée par ajout d'une composition gélifiable comportant par exemple un ou plusieurs hydrocolloïdes tels qu'alginate ou pectate de sodium, pectine, carraghénates, ou autres, puis par gélification de ladite composition. A titre d'exemple une solution d'alginate de sodium est ajoutée à la viande hachée puis une gélification calcique de l'alginate est réalisée par ajout d'une solution de sel de calcium. Selon une variante, la gélification calcique, et éventuellement l'ajout préalable d'alginate, sont réalisés après extrusion de la viande hachée, par exemple par pulvérisation, seule une partie en surface de la couche extérieure de la veine étant alors agglomérée.

Selon une particularité, ladite couche interne de matériau de garniture constitue au plus 50% de l'épaisseur de la veine principale continue en section transversale, de préférence au plus un tiers de l'épaisseur de la veine principale continue.

Selon une autre particularité, ladite couche extérieure est réalisée par extrusion de chair animale hachée en morceaux fibreux de longueurs inférieure ou égale à 10 mm, de préférence 3 à 4 mm, et/ou de section transversale inférieure ou égale à 20mm².

Selon un mode de réalisation, ladite veine principale continue est obtenue par co-extrusion d'une couche annulaire de matériau principal et de la couche interne de matériau de garniture. La veine peut présenter une section transversale extérieure sensiblement circulaire. La mise en portion est alors réalisée de préférence au moyen de pinces agissant sensiblement symétriquement de part et d'autre de la veine principale. La veine principale peut aussi avoir une section transversale sensiblement rectangulaire.

Selon un autre mode de réalisation, ladite veine principale continue est obtenue par
- extrusion d'une couche secondaire inférieure continue de matériau principal,
- extrusion d'une couche interne continue de matériau de garniture et dépose de ladite couche interne sur la couche secondaire inférieure, et
- extrusion d'une couche secondaire supérieure continue de matériau principal et dépose de ladite couche secondaire supérieure en recouvrement de ladite couche secondaire inférieure et de la couche interne continue déposée sur cette dernière,
ladite couche secondaire supérieure reposant de part et d'autre de la couche interne sur la couche secondaire inférieure, et formant avec cette dernière la couche extérieure de la veine principale continue.

La présente invention a également pour objet un dispositif de fabrication de portions de produits alimentaires fourrées pour la mise en oeuvre du procédé décrit précédemment, caractérisé en ce qu'il comprend :
- un système d'extrusion apte à extruder deux matériaux différents pour former une veine principale continue fourrée comprenant une couche extérieure continue d'un matériau principal entourant une couche interne continue d'un matériau de garniture,
   et un système de mise en portions comprenant
- une bande de transport apte à recevoir sur son brin supérieur ladite veine principale continue,
- au moins une barre de pincement disposée au dessus de ladite bande de transport apte à être déplacée en direction de la bande de transport par des premiers moyens de déplacement pour pincer ladite veine principale continue au moins sensiblement transversalement entre son bord inférieur et le brin supérieur de la bande de transport
- au moins une lame de coupe, disposée au dessus de ladite bande de transport, en aval de ladite barre de pincement par rapport à la direction d'avancement de la veine principale continue, apte à être déplacée en direction de la bande de transport par des seconds moyens de déplacement pour couper en portions ladite veine principale continue au niveau des zones pincées.

Selon un autre mode de réalisation, le dispositif est caractérisé en ce qu'il comprend
- une tête de co-extrusion pour former une veine principale continue comprenant une couche extérieure continue d'un matériau principal entourant une couche interne continue d'un matériau de garniture, ladite tête de coextrusion comprenant
   - un premier conduit définissant un passage principal destiné à être alimenté en un matériau principal, et présentant un orifice de sortie sensiblement circulaire, et
   - un deuxième conduit disposé au moins partiellement concentriquement à l'intérieur du passage principal définissant un passage secondaire destiné à être alimenté en un matériau de garniture et présentant un orifice de sortie, de préférence sensiblement circulaire, le diamètre de l'orifice de sortie du deuxième conduit étant sensiblement égal ou inférieur à la moitié du diamètre de l'orifice de sortie du premier conduit, et
- un système de mise en portions comprenant
   - des moyens de pincement comportant au moins une paire de pinces opposées aptes à être déplacées l'une vers l'autre par des premiers moyens d'actionnement d'une position ouverte vers une position fermée pour pincer la veine principale, lesdits premiers moyens d'actionnement étant aptes à rapprocher et écarter les pinces selon un mouvement de va-et-vient à la fois dans la direction orthogonale et la direction parallèle à la direction de transport de la veine principale, la vitesse de déplacement des pinces étant sensiblement égale à la vitesse de transport de la veine principale lorsque les pinces sont en contact avec la veine principale pour les opérations de pincement et de coupe, et variable en dehors des opérations de pincement et de coupe,
      chaque pince de ladite paire comprenant au moins deux plaques principales munies en extrémité d'un bord avant de pincement et disposées de sorte que, lors du déplacement des pinces vers leur position fermée, les plaques principales des pinces sont positionnées en alternance, deux plaques adjacentes n'appartenant pas à la même pince, et forment par leur bord avant de pincement des passages ou diaphragmes dont la section diminue progressivement,
   - des moyens de coupe comprenant au moins une lame associée à la paire de pinces apte à être déplacée, par des seconds moyens d'actionnement entre les passages pour couper la veine principale.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux dessins schématiques annexés, sur lesquels :
- la figure 1 représente une vue schématique partielle en coupe longitudinale d'un dispositif de fabrication de portions de produits alimentaires fourrées d'une garniture selon un premier mode de réalisation ;
- la figure 2 représente une vue partielle en perspective du dispositif de la figure 1 ;
- la figure 3 représente une vue agrandie du détail D1 de la figure 1, illustrant le pincement de la veine principale continue fourrée ;
- la figure 4 représente une vue agrandie du détail D2 de la figure 3, illustrant la coupe de la veine principale ;
- la figure 5 est une vue schématique partielle en coupe longitudinale d'une variante de réalisation du dispositif de la figure 1 ;
- les figures 6A et 6B représentent deux vues agrandies en perspective de la tête de coextrusion du dispositif de la figure 5 ;
- la figure 7 est une vue partielle en perspective d'un dispositif de fabrication de portions de produits alimentaires fourrées d'une garniture selon un deuxième mode de réalisation ;
- la figure 8 est une vue agrandie du détail D3 de la figure 7 ;
- la figure 9 est une vue selon le plan de coupe vertical IX-IX de la figure 7 ;
- la figure 10 est une vue en coupe selon un plan de coupe perpendiculaire aux axes de rotation des pinces, sensiblement selon l'axe longitudinal de la veine principale ;
- la figure 11 est une vue en coupe transversale de la veine principale obtenue par le dispositif de la figure 7 ; et,
- les figures 12A à 12D représentent des vues partielles de dessus de veines principales pouvant être obtenues par le dispositif de la figure 1 ou 5, sur lesquelles sont illustrées schématiquement des variantes de réalisation pour les opérations de pincement et de découpe.

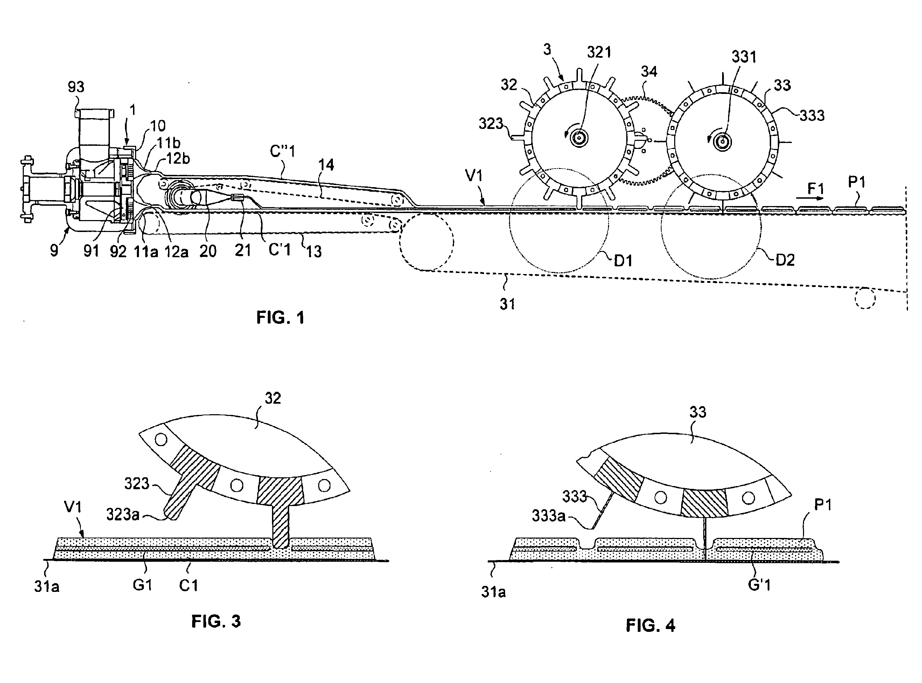

Considérant d'abord les figures 1 à 3, elles illustrent de manière schématique un dispositif de fabrication de portions de produits alimentaires selon un premier mode de réalisation destiné en particulier à la fabrication de pavés P1 de viande hachée crue, de forme globalement parallélépipédique, pourvus d'une garniture intérieure G'1.

Le dispositif comprend un système d'extrusion 1 permettant d'extruder en continu une veine principale V1 continue formée d'une couche extérieure C1 continue de viande hachée entourant une couche interne G1 d'un matériau de garniture, tel qu'une pâte de fromage fondu, et un dispositif de mise en portion 3.

Ledit système d'extrusion comprend une première tête d'extrusion 10 comportant deux becs d'extrusion 11a, 11b, décalés verticalement l'un de l'autre, comprenant chacun un orifice d'extrusion 12a, 12b de section sensiblement rectangulaire pour former une couche secondaire inférieure C'1 et une couche secondaire supérieure C" 1 de viande hachée. Cette première tête d'extrusion est montée en sortie d'un dispositif de régulation de débit (non représenté), de type poussoir, telle qu'une pompe à pistons ou une pompe à palettes, alimentée via une trémie en un matériau dit principal, constitué de viande hachée. Tel qu'illustré sur la figure 1, la tête de co-extrusion est associée à un hachoir 9 comprenant classiquement un couteau rotatif 91 et une grille de sortie 92. La tête est montée à la sortie du hachoir, derrière la grille de sortie, l'entrée 93 du hachoir étant raccordée à la sortie de refoulement de la pompe. Les deux couches secondaires C'1 et C"1 sortant des orifices 12a et 12b présentent par exemple une structure filaire de type « cheveux d'ange » créée par la grille de sortie du hachoir.

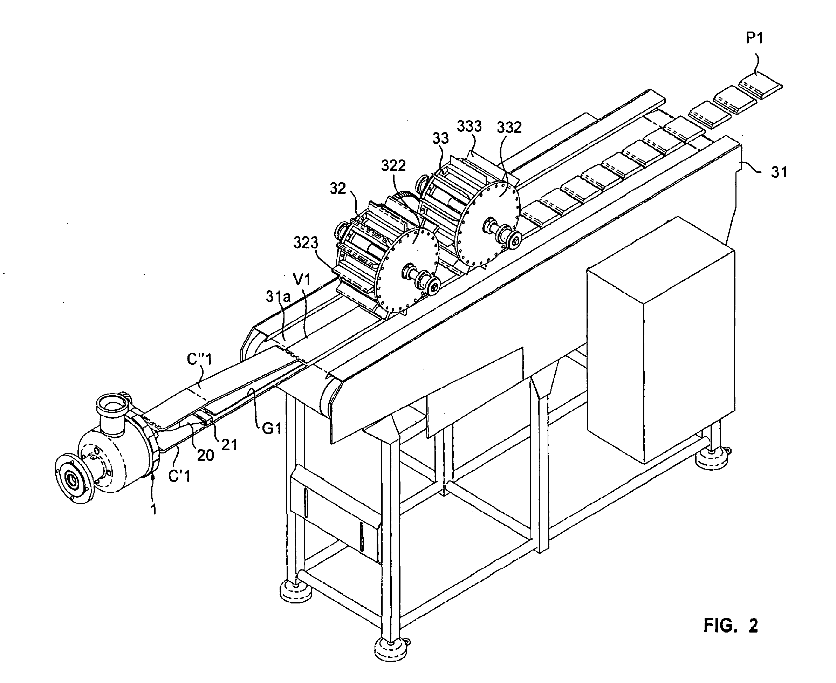

En référence à la figure 1, la couche inférieure C'1 est déposée sur le brin supérieur d'une bande de transport secondaire inférieure 13, tandis que la couche supérieure est reçue sur le brin supérieur d'une bande de transport secondaire supérieure 14, disposée au-dessus de la bande de transport secondaire inférieure 13. Les deux bandes de transport, non représentées sur la figure 2 dans un but de simplification et de clarté, sont entraînées sensiblement en isovitesse.

Le système de tête d'extrusion comprend une deuxième tête d'extrusion 20 disposée en aval de la première tête d'extrusion, entre les deux bandes de transport secondaires, pour l'extrusion sur la couche inférieure C'1 d'une couche interne continue G1 de matériau de garniture, de largeur inférieure à celle de la couche inférieure, et sensiblement au centre de cette dernière. Cette deuxième tête d'extrusion est connectée également à un dispositif de régulation de débit (non représenté), et présente un bec de distribution 21 muni d'un orifice de distribution sensiblement rectangulaire ayant une largeur inférieure à celle des orifices de distribution pour les couches secondaires de viande hachée.

La couche inférieure C'1 recouverte de la couche de garniture G1 est reprise sur le brin supérieur 31a d'une bande de transport, dite principale 31, du système de mise en portion.

Les roues de renvoi aval des bandes de transport secondaires sont positionnées sensiblement à la verticale l'une de l'autre, de sorte que la couche supérieure C"1 est déposée en sortie de la bande de transport secondaire supérieure sur la couche inférieure C'1 et la couche interne de garniture venant d'être déposées, pour former la veine principale V1 continue. De part et d'autre de la couche interne de garniture, la couche secondaire supérieure C"1 repose sur la couche secondaire inférieure C'1 et forme avec cette dernière la couche extérieure C1 de la veine principale continue. En variante la bande de transport secondaire inférieure 13 est confondue avec la bande de transport principale 31.

Les épaisseurs des couches secondaires sont sensiblement identiques. Dans le présent mode de réalisation, l'épaisseur de chacune des couches secondaires inférieure et supérieure C'1, C"1 est plus de deux fois supérieure à celle de la couche de garniture G1.

Le système de mise en portion, représenté partiellement et schématiquement sur les figures, comprend ladite bande de transport principale 31 et, disposés successivement au-dessus de ladite bande de transport, d'amont en aval par rapport à la direction d'avancement F1 de la veine principale, une roue de pincement 32, de type roue à aubes, puis une roue de coupe 33.

En référence aux figures 2 et 3, la roue de pincement 32 a un axe 321, disposé transversalement à la direction d'avancement F1, et portant deux flasques 322. Entre ces flasques, est montée une pluralité de barres de pincement 323 transversales droites disposées à espace angulaire régulier, parallèlement à l'axe 321, et s'étendant radialement vers l'extérieur. La roue de pincement 32 est disposée au-dessus de la bande de transport principale, de sorte que chaque barre est apte à venir pincer la veine principale entre son bord extérieur 323a transversal et le brin supérieur 31a de la bande de transport principale. Comme mieux visible sur la figure 3, lorsqu'une barre est positionnée sensiblement verticalement, son bord extérieur 323a, de préférence arrondi, est disposé à distance du brin supérieur 31a de manière à écraser sur toute sa largeur la veine principale, sur une zone dite pincée ou écrasée, sans la sectionner. A titre d'exemple, la distance entre le bord extérieur 323a et le brin supérieur 31a correspond environ à la moitié de l'épaisseur totale de la veine principale.

Lors de cette opération de pincement, la garniture de la couche interne G 1 est chassée sensiblement perpendiculairement à la barre transversale, de sorte que la zone pincée soit sensiblement dépourvue de garniture. Pour ce faire, selon l'invention, la viande hachée constituant la couche extérieure de la veine principale a été préalablement refroidie à une température de traitement inférieure à 0°C, mais supérieure à la température de la congélation de la viande hachée. Selon un mode de réalisation, avant extrusion, la viande hachée est malaxée avec de l'azote pour être refroidie à une température de traitement, par exemple de l'ordre de -3°C pour de la viande hachée de dinde ou de poulet. La viande hachée refroidie est chargée dans la trémie de la pompe puis extrudée en deux couches secondaires, tel que décrit précédemment, pour former une veine principale avec une couche extérieure refroidie qui est transférée à mesure de sa formation vers la roue de pincement et la roue de coupe. En variante, en remplacement du traitement thermique précitée, la viande hachée est gélifiée avant extrusion par malaxage avec une solution d'alginate de sodium, puis par malaxage avec une solution d'acétate de calcium pour gélifier l'alginate. La viande hachée est ensuite extrudée à une température classique de l'ordre de 4°C.

La roue de coupe 33 a un axe 331, disposé transversalement à la direction d'avancement F1, portant deux flasques 332. Entre ces flasques, est montée une pluralité de lames planes 333 transversales, disposées à espace angulaire régulier, parallèlement à l'axe, et s'étendant radialement vers l'extérieur. La roue est disposée au-dessus de la bande de transport principale de sorte que chaque lame plane est apte à venir couper la veine principale V1 sur toute son épaisseur, sensiblement au milieu d'une zone pincée, par son bord de coupe 333a transversal. Comme mieux visible sur la figure 4, lorsqu'une lame plane est positionnée sensiblement verticalement, son bord de coupe 333a, est disposé contre le brin supérieur 31a de la bande de transport principale de manière à sectionner la veine principale et former des portions fourrées P1.

La roue de pincement et la roue de coupe sont entraînées en isovitesse par un système d'entrainement commun 34, et en synchronisme avec la bande de transport principale.

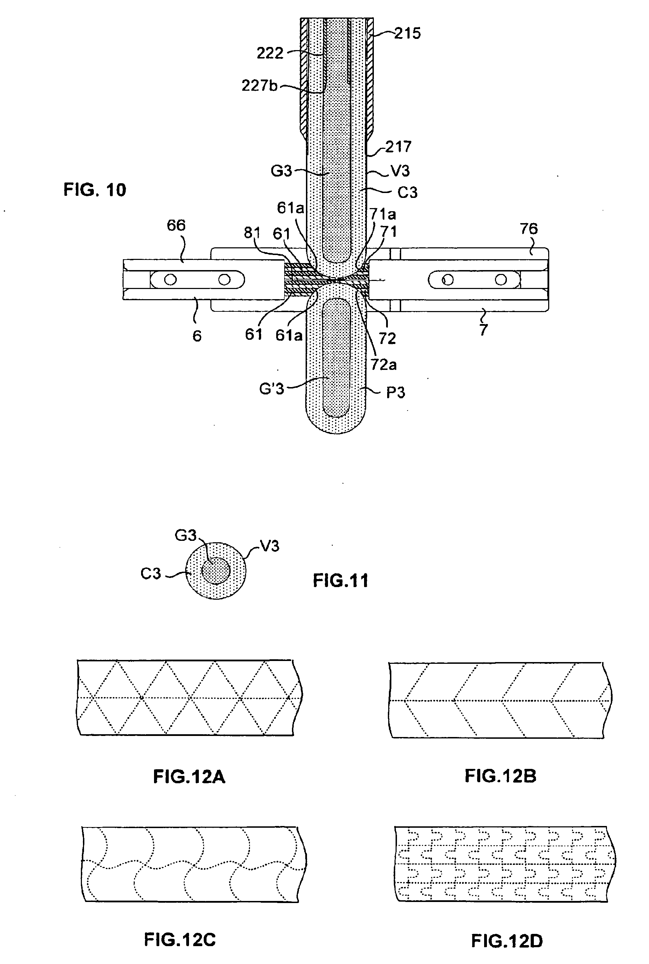

Selon des variantes de réalisation, la roue de pincement et la roue de coupe sont adaptées pour écraser et sectionner longitudinalement la veine afin de former au moins deux portions dans la largeur de la veine principale et/ou pour former des portions identiques à contours incurvés ou triangulaire par exemple, sans perte de matière. Les figures 12A à 12D illustrent des vues de dessus schématique de veines principales sur lesquelles sont représentées en traits discontinus des lignes de pincement et de coupe réalisables en montant sur les roues de pincement et de coupe des barres de pincement et des lames de coupe complémentaires de formes appropriées, pour former des portions de différentes formes.

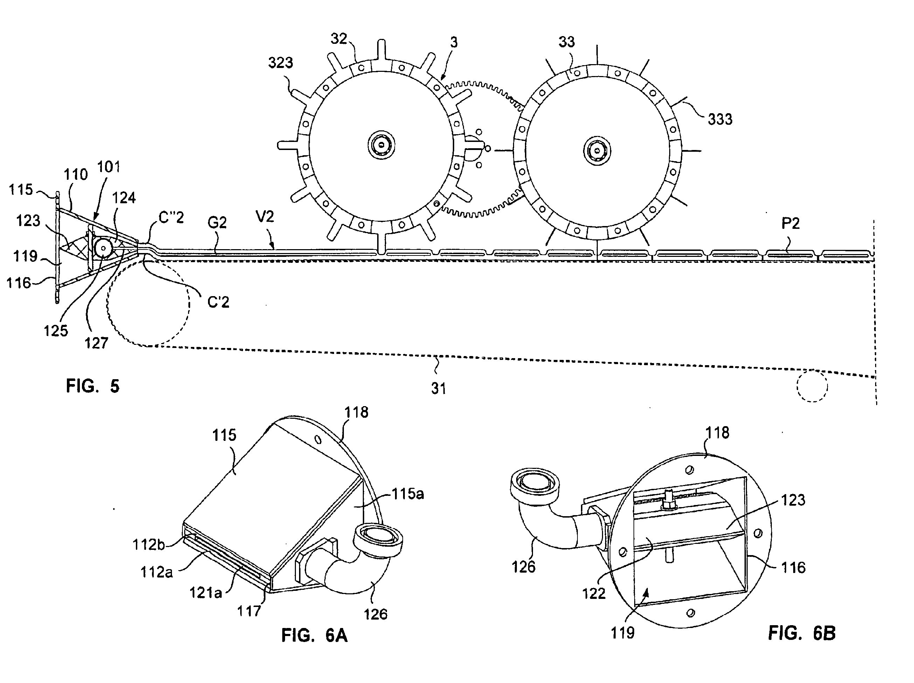

Dans une variante de réalisation illustrée à la figure 5, le système d'extrusion 101 comprend une tête de co-extrusion 110 unique pour extruder simultanément une couche interne G2 de garniture entre une couche secondaire supérieure C"2 et une couche secondaire inférieure C'2 de viande hachée.

En référence aux figures 5, 6A et 6B, la tête de coextrusion comprend une conduite tubulaire 115 comprenant un passage interne 119 de section rectangulaire diminuant progressivement de sa première ouverture 116 à sa deuxième ouverture 117. La conduite est munie à sa première ouverture d'une bride 118 pour son montage à la sortie d'une pompe ou d'un hachoir associé à une pompe. Une pièce 122 est montée à l'intérieur du passage interne pour le subdiviser en deux passages secondaires identiques et former à la deuxième ouverture deux orifices de distribution 112a, 112b pour l'extrusion des couches secondaires inférieure et supérieure C'2, C"2. La pièce 122 présente une partie amont 123 en forme de coin, de section longitudinale en triangle isocèle, pour assurer la division du flux de viande hachée entrant dans la tête de coextrusion, et une partie aval 124 également en forme de coin pour former les deux orifices de distribution. Ladite pièce s'étend sur toute la largeur du passage interne de la conduite, d'une paroi latérale à l'autre de la conduite. Ladite pièce 122 est munie d'un canal transversal 125 cylindrique qui débouche sur l'une 115a des parois latérales et qui est destiné à être connecté, via une conduite 126, à un dispositif de type poussoir pour être alimenté en un matériau de garniture. Ce canal transversal se prolonge par un canal longitudinal 127 débouchant sur l'extrémité de la partie aval 124 de la pièce pour former un orifice de distribution 121 a pour l'extrusion de la garniture, de largeur inférieure à celles des orifices de distribution de viande hachée.

La tête de coextrusion 110 est par exemple disposée directement au-dessus du brin supérieur 31 a de la bande de transport principale 31 1 d'un dispositif de mise en portion tel que décrit précédemment pour former des portions P2. En sortie de tête de co-extrusion, la couche secondaire supérieure C"2 repose sur la couche secondaire inférieure C'2 de part et d'autre de la couche interne de garniture pour former la couche externe C2 d'une veine principale V2.

En variante, la tête de coextrusion précitée peut être adaptée pour extruder directement une veine principale globalement de section rectangulaire, comprenant une couche extérieure annulaire de viande hachée entourant une couche centrale de garniture, la tête comprenant alors un seul orifice de distribution annulaire pour extruder la viande hachée.

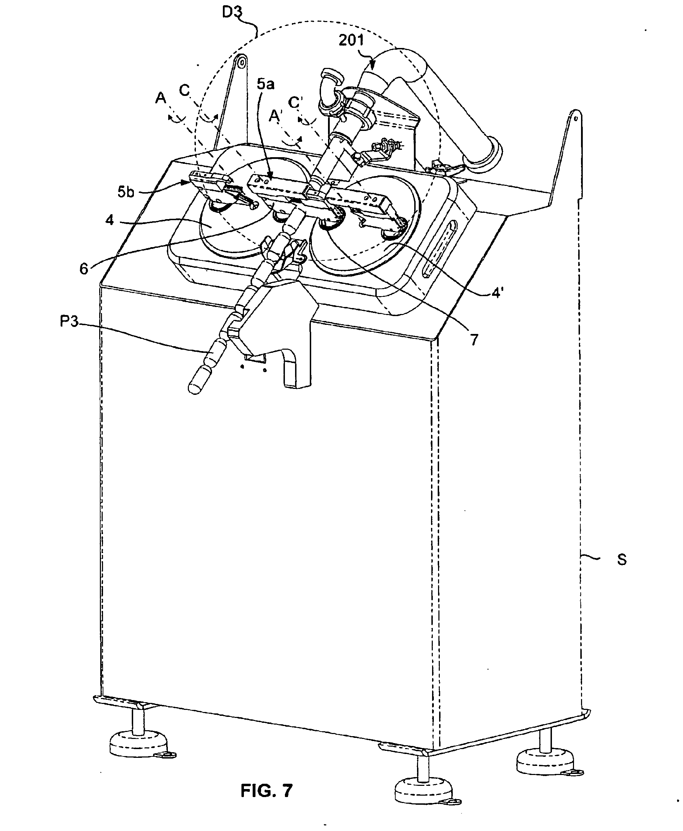

La figure 7 illustre de manière schématique un dispositif de fabrication de portions de produits alimentaires selon un deuxième mode de réalisation, en particulier pour la fabrication de portions fourrées P3 sensiblement cylindriques formés d'une couche extérieure C3 annulaire de viande hachée crue, entourant une couche sensiblement cylindrique d'un matériau de garniture G'3.

Le dispositif comprend une tête de coextrusion 201 permettant d'extruder en continue une veine principale V3 formée d'une couche externe C3 annulaire de viande hachée entourant une couche interne G3 de matériau de garniture, tel qu'illustré notamment à la figure 11.

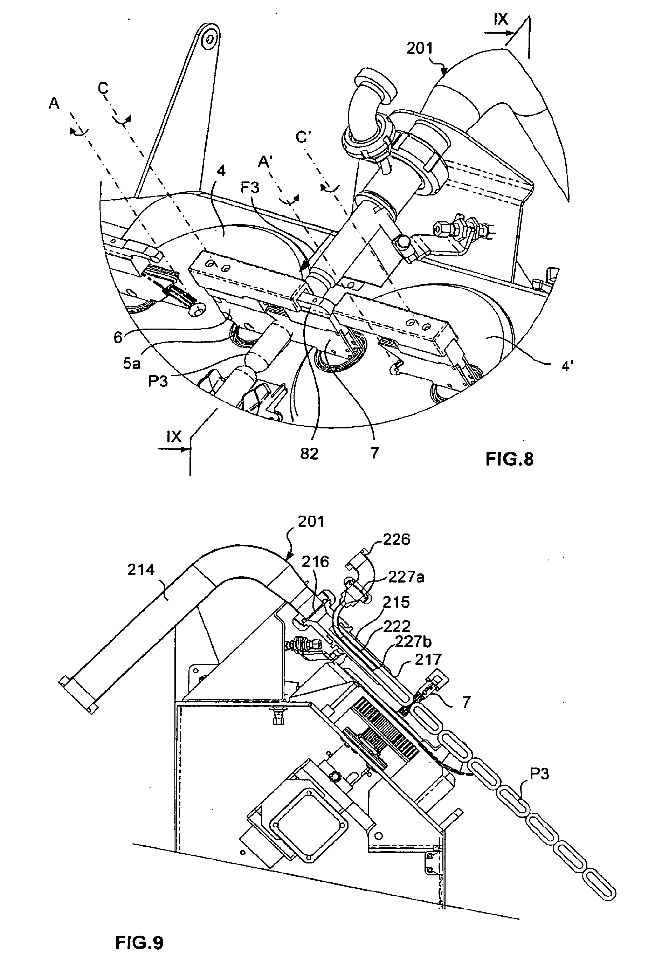

En référence aux figures 8 et 9, la tête de coextrusion 201 comprend un premier conduit 215 définissant un passage principal, de section transversale sensiblement circulaire, avec un orifice d'entrée 216 et un orifice de sortie 217 destiné à être connecté via un conduit de raccordement 214 à la sortie d'un dispositif classique de type « poussoir », pour être alimenté en viande hachée refroidie à une température de traitement, tel que décrit précédemment.

La tête de coextrusion comprend un deuxième conduit 222 définissant un passage secondaire, par exemple de section transversale sensiblement circulaire, avec un orifice d'entrée 227a et un orifice de sortie 227b. Ce deuxième conduit, destiné à être alimenté en matériau de garniture, comprend une portion rectiligne qui est disposée coaxialement dans le passage principal, et dont l'extrémité libre, disposée en retrait par rapport à l'orifice de sortie 217 du premier conduit, définit l'extrémité de sortie 227b du passage secondaire. Cette première portion se prolonge par une portion coudée s'étendant à travers la paroi du premier conduit et délimitée par l'orifice d'entrée 227a. L'orifice d'entrée est équipé d'un raccord 226 pour le raccordement du passage secondaire à un dispositif classique de type « poussoir » afin d'alimenter ledit passage en matériau de garniture.

Dans le présent mode de réalisation le diamètre de l'orifice de sortie du passage secondaire pour l'extrusion de la garniture est sensiblement égal à la moitié du diamètre de l'orifice de sortie du passage principale.

Le dispositif comprend un système de mise en portions comprenant une paire de pinces opposées aptes à être déplacées l'une vers l'autre par des moyens d'actionnement d'une position ouverte vers une position fermée afin de pincer la veine principale sortant de la tête de coextrusion. Les deux pinces sont disposées et déplacées de sorte qu'un passage subsiste dans la position fermée. Le système de mise en portion comprend en outre des moyens de coupe comprenant une lame associée à la paire de pinces, apte à être actionnée par des moyens d'actionnement pour couper la veine principale au niveau de la zone pincée lorsque les pinces sont en position fermée.

Le dispositif de mise en portion est par exemple du type décrit dans la demande de brevet français n° 07 03162. Les pinces de chaque paire sont montées rotatives sur des disques tournant pour être déplacées selon un mouvement de va-et-vient par translation circulaire. En référence en particulier aux figures 7 et 8, le dispositif comprend un châssis support S sur la partie supérieure duquel sont montés un premier disque tournant 4, d'axe de rotation A, et un deuxième disque tournant 4' d'axe de rotation A', les deux axes de rotation étant disposés parallèlement entre eux et sensiblement perpendiculairement à la direction d'avancement F3 de la veine principale à portionner. Une première paire 5a de pinces comprend une première pince 6 montée pivotante sur le premier disque tournant 4 autour d'un axe de rotation C disposé parallèlement à l'axe de rotation A du disque et à distance de ce dernier, et une deuxième pince 7 montée de manière analogue sur le deuxième disque 4' autour d'un axe de rotation C' parallèle à l'axe A'.

En référence aux figures 8 et 11, la première pince 6 comprend quatre plaques principales 61 parallèles entre elles, et espacées l'une de l'autre. Chaque plaque présente à son extrémité avant une encoche qui définit un bord avant de pincement 61 a en forme générale de V. Les plaques principales sont solidaires d'une partie de montage 66 par laquelle la pince est montée pivotante sur le premier disque, ses plaques étant disposées parallèlement à l'axe de rotation C. De manière similaire, la deuxième pince 7 comprend quatre plaques principales 71 avec des bords de pincement 71a, et une partie de montage 76.

Les disques sont entraînés en rotation autour de leur axe A et A' dans des directions inverses, de sorte que les pinces se déplacent dans la direction d'avancement F3 de la veine lorsqu'elles sont en contact avec cette dernière, et à la même vitesse que celle de la veine principale, et les pinces sont entraînées en rotation sur les disques autour de leur axe C et C' de manière à rester disposées constamment perpendiculaires à la direction de transport F3 de la veine, et parallèles entre elles, avec leur bord avant en vis-à-vis.

Lors du déplacement des pinces vers la position fermée illustrée aux figures 7 et 8, les plaques principales d'une pince viennent s'intercaler avec celles de l'autre pince de sorte que deux plaques successives 41, 71 se chevauchent à la manière d'une cisaille et forment par leur bords avant 41 a, 71 a un passage ou diaphragme dont la section diminue progressivement, pour progressivement pincer la veine principale.

Comme visible sur les figures 11, les bords de pincement des plaques principales présentent des profils différents, de sorte qu'en position fermée, les ouvertures des diaphragmes formées par les plaques principales extérieures des pinces soient plus importantes que celles des diaphragmes formés par les plaques principales centrales. Lors du pincement progressif, la garniture est progressivement chassée de la zone de pincement. Avantageusement, chaque pince comprend en outre quatre plaques secondaires 62, 72 disposées en alternance avec les plaques principales de la pince, chaque plaque secondaire d'une pince comprenant un bord avant, de forme complémentaire du bord avant de la plaque principale de l'autre pince disposée en vis-à-vis en position fermée des pinces, ledit bord avant comprenant une partie centrale de pincement 62a, 72a.

Le système de coupe comprend une lame plane 81, représenté schématiquement sur la figure 10, montée de manière pivotante sur la première pince, entre les deux plaques principales centrales. La lame est sollicitée élastiquement par un ressort dans une position rétractée dans laquelle la lame est disposée entre les deux plaques, en retrait par rapport à leur bord de pincement 61a. La lame est apte à coopérer avec l'extrémité libre d'un doigt d'actionnement 82 (figure 8) monté sur la deuxième pince 7 dans la position fermée des pinces pour faire pivoter la lame à l'encontre du ressort vers une position active pour couper la zone pincée de la veine principale.

Tel qu'illustré sur les figures, les disques tournant peuvent comprendre une deuxième paire de pinces. Sur chaque disque, les pinces sont disposées symétriquement de part et d'autre de l'axe de rotation du disque.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de fabrication de portions de produits alimentaires fourrées d'une garniture, formées d'un matériau principal à base de chair animale en morceaux, telle que de viande hachée crue de boeuf, de veau, de porc ou de volaille, ou de chair de poisson, entourant un matériau de garniture, **caractérisé en ce que** ledit procédé comprend
- une étape de réalisation par extrusion d'une veine principale continue (V1, V2, V3) fourrée comprenant une couche extérieure (C1, C2, C3) de matériau principal entourant une couche interne (G1, G2, G3) d'un matériau de garniture liquide, semi-liquide ou pâteux,
- une étape de traitement du matériau principal, avant, pendant et/ou après la réalisation de ladite veine principale continue, pour augmenter la cohésion des morceaux de chair animale constituant ledit matériau principal,
- une étape de mise en portions de ladite veine principale continue par pincement de la couche extérieure de matériau principal traité, au moins transversalement, pour chasser le matériau de garniture de la couche interne, puis par coupe de ladite veine principale au niveau de sa zone pincée sensiblement dépourvue de matériau de garniture pour former des portions (P1, P2, P3).

2. Procédé selon la revendication 1, **caractérisé en ce que** ladite étape de traitement comprend le refroidissement du matériau principal, à une température inférieure ou égale à 0°C, et supérieure au point de congélation du matériau principal.

3. Procédé selon la revendication 2, **caractérisé en ce que** le refroidissement est réalisé avant l'extrusion dudit matériau principal en couche extérieure continue (C1, C2, C3).

4. Procédé selon l'une des revendications 1 à 3, **caractérisé en ce que** l'étape de traitement est réalisée par agglomération d'au moins une partie des morceaux de chair animale au moyen d'un gélifiant.

5. Procédé selon l'une des revendications 1 à 4, **caractérisé en ce que** ladite couche interne (G1, G2, G3) de matériau de garniture
constitue au plus 50% de l'épaisseur de la veine principale continue (VI, V3, V3) en section transversale, de préférence au plus un tiers de l'épaisseur de la veine principale continue.

6. Procédé selon l'une des revendications 1 à 5, **caractérisé en ce que** ladite couche extérieure (C1, C2, C3) est réalisée par extrusion de chair animale hachée en morceaux fibreux de longueurs inférieure ou égale à 10 mm, et de section transversale inférieure ou égale à 20 mm².

7. Procédé selon l'une des revendications 1 à 6, **caractérisé en ce que** ladite veine principale continue (V3) est obtenue par co-extrusion d'une couche extérieure (C3) annulaire de matériau principal et de la couche interne (G3) de matériau de garniture.

8. Procédé selon l'une des revendications 1 à 6, **caractérisé en ce que** ladite veine principale continue (V2) est obtenue par
- extrusion d'une couche secondaire inférieure (C'1) continue de matériau principal,
- extrusion d'une couche interne (G1) de matériau de garniture et dépose de ladite couche interne sur la couche secondaire inférieure, et
- extrusion d'une couche secondaire supérieure (C" 1) de matériau principal et dépose de ladite couche secondaire supérieure en recouvrement de ladite couche secondaire inférieure et de la couche interne continue déposée sur cette dernière,
ladite couche secondaire supérieure reposant de part et d'autre de la couche interne sur la couche secondaire inférieure, et formant avec cette dernière la couche extérieure (C1) continue de la veine principale continue.

9. Dispositif de fabrication de portions de produits alimentaires fourrées pour la mise en oeuvre du procédé selon l'une des revendications 1 à 8, **caractérisé en ce qu'**il comprend
- une tête de coextrusion (201) pour former une veine principale continue (V3) comprenant une couche extérieure (C3) d'un matériau principal entourant une couche interne (G3) d'un matériau de garniture, ladite tête de coextrusion comprenant
- un premier conduit (215) définissant un passage principal destiné à être alimenté en un matériau principal, et présentant un orifice de sortie (217) sensiblement circulaire, et
- un deuxième conduit (222) disposé au moins partiellement concentriquement à l'intérieur du passage principal, définissant un passage secondaire destiné à être alimenté en un matériau de garniture et présentant un orifice de sortie (227b) sensiblement circulaire, le diamètre de l'orifice de sortie du deuxième conduit étant sensiblement égal ou inférieur à la moitié du diamètre de l'orifice de sortie du premier conduit, et
- un système de mise en portions comprenant
- des moyens de pincement comportant au moins une paire de pinces (6, 7) opposées aptes à être déplacées l'une vers l'autre par des premiers moyens d'actionnement d'une position ouverte vers une position fermée pour pincer la veine principale, lesdits premiers moyens d'actionnement étant aptes à rapprocher et écarter les pinces selon un mouvement de va-et-vient à la fois dans la direction orthogonale et la direction parallèle à la direction de transport (F3) de la veine principale (V3), chaque pince de ladite paire comprenant au moins deux plaques principales (61, 71) munies en extrémité d'un bord avant de pincement (61a, 71a) et disposées de sorte que, lors du déplacement des pinces vers leur position fermée, les plaques principales des pinces sont positionnées en alternance, et forment par leur bord avant de pincement des passages ou diaphragmes dont la section diminue progressivement,
- des moyens de coupe comprenant au moins une lame de coupe (82) associée à la paire de pinces apte à être déplacée, par des seconds moyens d'actionneinent, entre les passages pour couper la veine principale.

## Claims

1. Method for making portions of food products stuffed with a filling, formed of a main material containing animal meat in pieces, such as raw minced meat of beef, veal, pork or poultry, or fish flesh, surrounding a filling material, **characterised in that** said method comprises
- a step of producing via extrusion of a main continuous stuffed vein (V1, V2, V3) comprising an outer layer (C1, C2, C3) of main material surrounding an inner layer (G1, G2, G3) of a liquid, semi-liquid or pasty filling material,
- a step of processing the main material, before, during and/or after the production of said main continuous vein, in order to increase the cohesion of the pieces of animal meat constituting said main material,
- a step of portioning said main continuous vein by nipping the outer layer of processed main material, at least transversally, in order to expel the filling material of the inner layer, then by cutting said main vein on its nipped area substantially devoid of filling material in order to form portions (P1, P2, P3).

2. Method according to claim 1, **characterised in that** said step of processing comprises the cooling of the main material, to a temperature less than or equal to 0°C, and greater than the freezing point of the main material.

3. Method according to claim 2, **characterised in that** the cooling is carried out before the extrusion of said main material in continuous outer layer (C1, C2, C3) .

4. Method according to one of claims 1 to 3, **characterised in that** the step of processing is carried out by agglomeration of at least one portion of the pieces of animal meat by means of a gelling agent.

5. Method according to one of claims 1 to 4, **characterised in that** said inner layer (G1, G2, G3) of filling material constitutes at most 50% of the thickness of the main continuous vein (V1, V3, V3) as a transversal section, more preferably at most one-third of the thickness of the main continuous vein.

6. Method according to one of claims 1 to 5, **characterised in that** said outer layer (C1, C2, C3) is carried out by extrusion of animal meat minced into fibrous pieces of lengths less than or equal to 10 mm, and of transversal section less than or equal to 20 mm².

7. Method according to one of claims 1 to 6, **characterised in that** said main continuous vein (V3) is obtained by co-extrusion of an outer annular layer (C3) of main material and of the inner layer (G3) of filling material.

8. Method according to one of claims 1 to 6, **characterised in that** said main continuous vein (V2) is obtained by
- extrusion of a continuous lower secondary layer (C'1) of main material,
- extrusion of an inner layer (G1) of filling material and depositing said inner layer on the lower secondary layer, and
- extrusion of an upper secondary layer (C"1) of main material and depositing said upper secondary layer for covering said lower secondary layer and the continuous inner layer deposited on the latter,
said upper secondary layer resting on either side of the inner layer on the lower secondary layer, and forming with the latter the continuous outer layer (C1) of the main continuous vein.

9. Device for the production of portions of stuffed food products for the implementation of the method according to one of claims 1 to 8, **characterised in that** it comprises
- a co-extrusion head (201) for forming a main continuous vein (V3) comprising an outer layer (C3) of a main material surrounding an inner layer (G3) of a filling material, said co-extrusion head comprising
- a first duct (215) defining a main passage intended to be supplied with a main material, and having a substantially circular output orifice (217), and
- a second duct (222) arranged at least partially concentrically inside the main passage, defining a secondary passage intended to be supplied with a filling material and having a substantially circular output orifice (227b), the diameter of the output orifice of the second duct being substantially less than or equal to half of the diameter of the output orifice of the first duct, and
- a system for portioning comprising
- means for nipping comprising at least one pair of opposite nippers (6, 7) able to be displaced towards one another by the first means of actuating from an open position to a closed position in order to nip the main vein, said first means of actuating being able to move closer and move away the nippers according to a back-and-forth movement in the orthogonal direction as well as in the direction parallel to the transport direction (F3) of the main vein (V3), each nippers of said pair comprising at least two main plates (61, 71) provided at the end with a front nipping edge (61a, 71a) and arranged in such a way that, during the displacement of the nippers towards their closed position, the main plates of the nippers are positioned in alternation, and form by their front nipping edge passages or diaphragms of which the section decreases progressively,
- means for cutting comprising at least one cutting blade (82) associated to the pair of nippers able to be displaced, by second means of actuating, between the passages in order to cut the main vein.

## Patentansprüche

1. Verfahren zum Herstellen von Portionen von Lebensmittelprodukten, die mit einer Garnierung versehen sind und aus einem Hauptmaterial auf Basis von tierischem Fleisch in Stücken gebildet sind, wie etwa aus rohem Rinder-, Kalbs-, Schweine- oder Geflügelhackfleisch oder aus Fischfleisch, das ein Garniermaterial umgibt, **dadurch gekennzeichnet, dass** das Verfahren umfasst:
- einen Schritt zum Herstellen eines gefüllten, durchgehenden Hauptstrangs (V1, V2, V3) durch Extrusion, der eine Außenlage (C1, C2, C3) aus dem Hauptmaterial aufweist, die eine Innenlage (G1, G2, G3) aus einem flüssigen, halbflüssigen oder pastösen Garniermaterial umgibt,
- einen Schritt zum Behandeln des Hauptmaterials vor, während und/oder nach dem Herstellen des durchgehenden Hauptstrangs, um den Zusammenhalt der das Hauptmaterial bildenden Tierfleischstücke zu verstärken,
- einen Schritt zum Portionieren des durchgehenden Hauptstrangs durch zumindest transversal erfolgendes Einklemmen der Außenlage des behandelten Hauptmaterials, um das Garniermaterial der Innenlage zu verdrängen, dann durch Abschneiden des Hauptstrangs im Bereich seines Einklemmbereichs, der im wesentlichen frei von Garniermaterial ist, um Portionen (P1, P2, P3) zu bilden.

2. Verfahren nach Anspruch 1, **dadurch gekennzeichnet, dass** der Behandlungsschritt das Abkühlen des Hauptmaterials auf eine Temperatur von unter oder gleich 0°C und über dem Gefrierpunkt des Hauptmaterials umfasst.

3. Verfahren nach Anspruch 2, **dadurch gekennzeichnet, dass** das Abkühlen vor der Extrusion des Hauptmaterials zu einer durchgehenden Außenlage (C1, C2, C3) erfolgt.

4. Verfahren nach einem der Ansprüche 1 bis 3, **dadurch gekennzeichnet, dass** der Behandlungsschritt durch Verdichten zumindest eines Teils der Tierfleischstücke mittels eines Geliermittels erfolgt.

5. Verfahren nach einem der Ansprüche 1 bis 4, **dadurch gekennzeichnet, dass** die Innenlage (G1, G2, G3) aus Garniermaterial höchstens 50 % der Dicke des durchgehenden Hauptstrangs (V1, V3, V3) im Querschnitt darstellt, vorzugsweise höchstens ein Drittel der Dicke des durchgehenden Hauptstrangs.

6. Verfahren nach einem der Ansprüche 1 bis 5, **dadurch gekennzeichnet, dass** die Außenlage (C1, C2, C3) durch Extrusion von Tierfleisch erfolgt, das in Faserstücke mit einer Länge von unter oder gleich 10 mm und mit einem Querschnitt von unter oder gleich 20 mm² zerhackt ist.

7. Verfahren nach einem der Ansprüche 1 bis 6, **dadurch gekennzeichnet, dass** der durchgehende Hauptstrang (V3) durch Koextrusion einer ringförmigen Außenlage (C3) aus dem Hauptmaterial und der Innenlage (G3) aus Garniermaterial erhalten wird.

8. Verfahren nach einem der Ansprüche 1 bis 6, **dadurch gekennzeichnet, dass** der durchgehende Hauptstrang (V2) erhalten wird durch
- Extrusion einer durchgehenden unteren Sekundärlage (C'1) aus dem Hauptmaterial,
- Extrusion einer Innenlage (G1) aus dem Garniermaterial und Ablegen der Innenlage auf die untere Sekundärlage, und
- Extrusion einer oberen Sekundärlage (C"1) aus dem Hauptmaterial und Ablegen der oberen Sekundärlage als Überdeckung der unteren Sekundärlage und der auf letztere abgelegten durchgehenden Innenlage,
wobei die obere Sekundärlage beiderseits von der Innenlage auf der unteren Sekundärlage aufliegt und mit letzterer die durchgehende Außenlage (C1) des durchgehenden Hauptstrangs bildet.

9. Vorrichtung zum Herstellen von Portionen von gefüllten Nahrungsmittelprodukten zum Durchführen des Verfahrens nach einem der Ansprüche 1 bis 8, **dadurch gekennzeichnet, dass** sie aufweist:
- einen Koextrusionskopf (201), um einen durchgehenden Hauptstrang (V3) mit einer Außenlage (C3) aus einem Hauptmaterial zu bilden, die eine Innenlage (G3) aus einem Garniermaterial umgibt, wobei der Koextrusionskopf aufweist:
- eine erste Rohrleitung (215), die einen Hauptdurchgang definiert, der dazu bestimmt ist, mit einem Hauptmaterial gespeist zu werden, und die eine im wesentlichen kreisrunde Austrittsöffnung (217) aufweist, und
- eine zweite Rohrleitung (222), die zumindest teilweise konzentrisch innerhalb des Hauptdurchgangs angeordnet ist und einen Nebendurchgang definiert, der dazu bestimmt ist, mit einem Garniermaterial gespeist zu werden, und die eine im wesentlichen kreisrunde Austrittsöffnung (227b) aufweist, wobei der Durchmesser der Austrittsöffnung der zweiten Rohrleitung im wesentlichen gleich oder kleiner als der halbe Durchmesser der Austrittsöffnung der ersten Rohrleitung ist, und
- ein Portioniersystem, enthaltend:
- Klemmmittel mit zumindest einem Paar von entgegengesetzten Klemmen (6, 7), die dazu geeignet sind, über erste Betätigungsmittel von einer Offenstellung in eine Schließstellung aufeinander zu verlagert zu werden, um den Hauptstrang einzuklemmen, wobei die ersten Betätigungsmittel dazu geeignet sind, die Klemmen mit einer Hin- und Herbewegung zugleich in orthogonaler Richtung und in zur Förderrichtung (F3) des Hauptstrangs (V3) parallel verlaufender Richtung anzunähern und zu entfernen, wobei jede Klemme des Klemmenpaares zumindest zwei Hauptplatten (61, 71) aufweist, die am Ende mit einer vorderen Klemmkante (61a, 71a) versehen und so angeordnet sind, dass bei Verlagerung der Klemmen in ihre Schließstellung die Hauptplatten der Klemmen abwechselnd positioniert werden und mit ihrer vorderen Klemmkante Durchgänge bzw. Drosseln bilden, die im Querschnitt fortschreitend kleiner werden,
- Schneidmittel mit zumindest einer dem Klemmenpaar zugeordneten Schneidklinge (82), die dazu geeignet ist, über zweite Betätigungsmittel zwischen den Durchgängen verlagert zu werden, um den Hauptstrang abzuschneiden.
